(19) Europäisches Patentamt
European Patent Office
Office européen des brevets

(11) Publication number: 0 215 492 B1

(12) **EUROPEAN PATENT SPECIFICATION**

(45) Date of publication of patent specification: **08.05.91** (51) Int. Cl.$^5$: **C04B 41/48**

(21) Application number: **86113089.6**

(22) Date of filing: **23.09.86**

# (54) Use of perfluoropolyether derivatives for protecting building materials from atmospherical agents.

(30) Priority: **24.09.85 IT 2225885**

(43) Date of publication of application:
**25.03.87 Bulletin 87/13**

(45) Publication of the grant of the patent:
**08.05.91 Bulletin 91/19**

(84) Designated Contracting States:
**AT BE CH DE FR GB LI NL**

(56) References cited:
**EP-A- 0 059 100**
**EP-A- 0 165 649**
**EP-A- 0 165 650**
**EP-A- 0 192 493**
**GB-A- 2 122 630**

(73) Proprietor: **AUSIMONT S.p.A.**
**31, Foro Buonaparte**
**I-20121 Milano(IT)**

(72) Inventor: **Strepparola, Ezio, Dr.**
**6, viale Partigiano**
**I-24047 Treviglio, Bergamo(IT)**
Inventor: **Caporiccio, Gerardo, Dr.**
**13, via E. Filiberto**
**I-20149 Milan(IT)**
Inventor: **Pasetti, Adolfo**
**2,piazza Sesia**
**I-20127 Milan(IT)**
Inventor: **Piacenti, Franco, Dr.**
**79, via Costa San Giorgio**
**I-50125 Firenze(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

It is known that perfluoropolyethers impart water-repellent properties to the surface of materials onto which they are applied.

Furthermore, the perfluoropolyethers exhibit a high Bunsen coefficient for the gas components of air and therefore permit the passage of air through the surface of the treated materials.

These properties render the perfluoropolyethers interesting as liquids suited to protect stoneworks and, in general, articles constructed of stones, marble, cement, tiles, gypsum or wood, from atmospherical agents. Such action is all the more appreciated as the protection is reversible, since it is due to the deposition of a thin liquid film on the surface of the article, such film being removable, if necessary.

Furthermore, the low refractive index of the perfluoropolyethers, which corresponds to a value of about 1.3 measured at 20 °C with the light of a sodium lamp, causes the manufactured article to retain its original appearance, avoiding optical interference phenomena which lead to color alterations.

The above-mentioned use of the perfluoropolyethers has been described in Applicant's IT-A-19 933 A/81. The perfluoropolyethers disclosed in this application are of the type with "inert" end groups, i.e. perfluoroalkyl groups.

It has been observed that the porosity of the material to be protected leads to a phenomenon consisting in a slow absorption of the type of perfluoropolyether utilized so far, such phenomenon causing a more or less slow migration (as a function of the type of porosity of the material) of the protecting liquid towards the innermost layers of the article. The consequence thereof is a lower effectiveness in the protection of the outermost areas of the treated article. While on particular materials, such as for example sandstones, the migration towards the inside is sufficiently slow so as to provide sufficient protection over a long period of time, in other cases (for example with tiles) this phenomenon impairs the surface protection, so that further surface treatments become necessary after some time, it being understood that the protection of the underlying layers remains sufficient to considerably slow down the absorption phenomenon.

It has now been found that it is possible to obtain a permanent protective action of the above-mentioned materials, if perfluoropolyether derivatives with functional end groups capable of forming chemical and/or physical bonds with the substrate are utilized as protecting agents or as coadjuvants.

Such functional end groups are fixed to the substrate to be protected, thus reducing the mobility of the perfluoropolyether and increasing the duration of the protective effect on the treated surface.

Optionally, depending on the type of bond formed with the substrate it is possible to remove the protecting agent later, if so desired, by solubilization in a proper solvent, such as e.g. mixtures of 1,1,2-trichloro-1,1,2-trifluoroethane and acetone (or methanol), in a ratio of from 1:1 to 4:1 by volume.

The other characteristics of use of these functionalized perfluoropolyether fluids remain analogous to those of the perfluoropolyethers disclosed in IT-A-19 933 A/81 filed on February 24,1981. In particular, such fluids exhibit:

1) capability of forming a thin protective layer having a low volatility and high resistance to the most aggressive chemical agents, such as e.g. acids and alkali; this results in a high resistance to the atmosphere and to the pollutants thereof;
2) high thermal stability and retaining of the fluid state even at low ambient temperatures;
3) low surface tension;
4) high water-repellency;
5) high oil-repellency;
6) permeability to air and water vapour;
7) resistance to light radiation and in particular to U.V. radiation.

In particular, the perfluoropolyethers useful for the permanent protective action belong to one of the following groups:

I) $Rf-O(C_3F_6O)_m(CFXO)_n-CFX-Y-Zp$

wherein Rf is a perfluoroalkyl group with 1 to 3 carbon atoms; ($C_3F_6O$) and (CFXO) are oxyperfluoroalkylene units statistically distributed along the chain, and X = F or $CF_3$; m and n are integers or n = O (m is always ≠ O) and m/n varies from 5 to 40 when n ≠ 0;

p may be 1 or 2;

the mean molecular weight varies from 500 to 10 000 (preferably from 900 to 6000);

Y is a divalent or trivalent organic linking radical;

Z is a functional group capable of forming a chemical and/or physical bond with the material to be protected and is selected from:

Z 1) a non-aromatic, non-fluorinated organic radical, free of active hydrogen atoms, containing two or more electron pair-donor heteroatoms, or an aromatic radical, optionally containing heteroatoms,

capable of forming coordinative bonds or charge transfer bonds, thus causing various kinds of adsorption phenomena on the substrate;

Z 2) $-CONR^2R^3$, -COOR

R is H or an alkyl group with 1 to 8 carbon atoms, an aromatic or alkylaromatic group such as benzyl, the aromatic groups optionally containing, as substituents, alkyl or polyethoxy groups,

$R^2$ and $R^3$ are H or an alkyl group containing 1 to 8 carbon atoms or a substitued phenyl group;

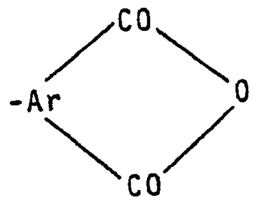 where Ar is an aromatic group;

-OH;

-NCO, 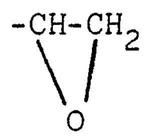, -NHR, -COR, $-SiR_t(OR)_{3-t}$

with t ranging from 0 to 2 and R being the same as defined hereinbefore;

Z 3) a group containing ethylenic unsaturations of the polymerizable type;

Z 4) a radical of class Z 1) containing one ore more of the substituents indicated in class Z 2).

II) $AO-(C_2F_4O)_p(CF_2O)_q-A'$

where unit $(C_2F_4O)$ and unit $(CF_2O)$ are statistically distributed along the chain;

p and q are integers such that p/q may vary from 5 to 0.3, preferably from 2.5 to 0.7;

A' is -CFX-Y-Zp;

A is A' or perfluoroalkyl with 1 to 3 carbon atoms;

p, X, Y and Z are the same as defined hereinabove;

the mean molecular weight varies from 1000 to 20000 (preferably from 1800 to 8000).

III) Perfluoropolyether compounds containing the units $(C_3F_6O)$, $(C_2F_4O)$ and (CFXO) statistically distributed along the chain with the indicated end groups A and A' as specified hereinbefore, and having a molecular weight ranging from 500 to 20000.

IV)Difunctional or monofunctional perfluoropolyether compounds having functional end groups comprising the units:

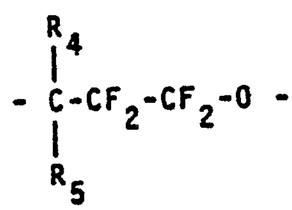

where $R_4$ and $R_5$ may be the same or different from each other and are selected from H, Cl, F, said units being statistically distributed along the polymer chain; having a mean molecular weight ranging from 1500 to 8000; and where a fluorine atom of the perfluoromethylene units may be substituted by H, Cl or by perfluoroalkoxy or perfluoroalkyl.

The above-identified end groups Z of class Z 1) are described in detail in IT-A-21480 A/84 and 21481 A/84. Those of class Z 3) are preferably selected from methacrylic, acrylic, cinnamic, vinyl, allyl, vinylether or allylether groups.

Group Y may be for example $-CH_2O-$, $-CH_2-O-CH_2-$, $-CH_2(OCH_2CH_2)_g-$ (g being an integer from 1 to 3), $-CF_2-$, $-CF_2O-$, $-CH_2-$, -CONR-, -COO-, -COS-, -CO-, $-CH_2NR-$, $-CH_2S-$, where R is the same as defined hereinabove.

Other linking groups Y are described in US-A-4 094 911 as radicals X or Y.

The starting compounds for obtaining monofunctional perfluoropolyethers of class IV are for example:

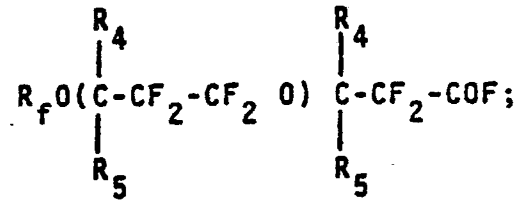

for obtaining the difunctional perfluoropolyethers they are for example:

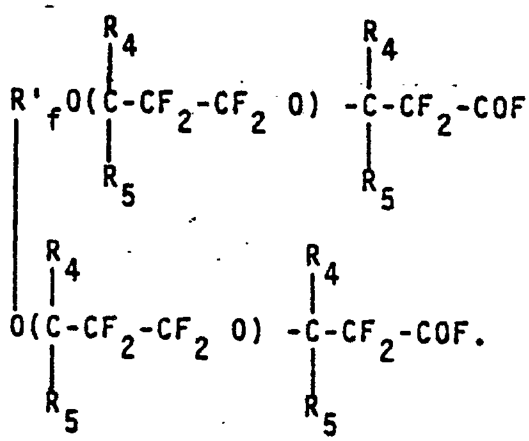

in which $R_f$ and $R'_f$ are monovalent and divalent fluoroalkyl radicals, respectively.

In the above compounds, end group COF can be converted for example to end groups Y-Z indicated in classes Z 1) or Z 2). The functionalized products of class IV) may be prepared according to the methods specified in EP-A-148 482.

It is understood that the difunctional products of classes II, III and IV indicated hereinabove can be also utilized in the form of their polycondensation products to provide, for example, polyurethanes, polyureas, polyesters, polyamides, polyethers, polyimides or polyamino acids.

When starting from a difunctional product with end groups -OH, a diisocyanate is used, or vice-versa. The polycondensation reaction can be carried out by using the fluorinated difunctional products of the invention, or a difunctional compound of the invention and a hydrogenated coreactant.

In the like manner the other polycondensation products are obtained as is well known in the art and described in US-A-4 080 319 for the polyamides, in US-A-3 876 617 for the polyamides and, in general, in US-A-3 810 874. If end groups Z of class Z 3) are utilized, then it is possible to use both monofunctional and difunctional products of classes I, II, III, IV.

The utilization of the polymeric products is particularly suited when a consolidating effect for the substrate is to be obtained. It is also possible to use copolymers obtained starting from the fluorinated monomers of the invention with hydrogenated coreactants, or vice-versa, as is stated for the polymers obtained by polycondensation.

These polymeric products can be applied to the substrate to be protected in the form of solutions, if the polymeric products are soluble (linear polymers). Otherwise, it is possible to carry out a polymerization on the substrate starting from the monomeric procuts, optionally in solution.

The compounds of classes I, II, III and IV can be used as such or dissolved in fluorocarbons or fluorochlorocarbons having a boiling point preferably not higher than 80° C. Furthermore they can be used in admixture with perfluoropolyethers with end groups of the inert type, having one of the following structures V, VI, VII:

V) Rf-O-$(C_3F_6O)_m(CFXO)_n$-Rf'

where $(C_3F_6O)$ and $(CFXO)$ are units statistically distributed along the chain;

Rf' may be like or different from Rf and both are selected from $CF_3$, $C_2F_5$ and $C_3F_7$;

X = F or $CF_3$;

m and n are integers;

when n = 0, Rf and Rf' are $C_2F_5$ or $C_3F_7$;

when n ≠ O, the m/n ratio varies from 5 to 40;

the mean molecular weight varies from 4000 to 10000.

VI) $CF_3$-$(C_2F_4O)_p$ $(CF_2O)_qCF_3$
where units ($C_2F_4O$) and ($CF_2O$) are statistically distributed along the chain and p and q are the same as defined hereinabove;
the mean molecular weight varies from 4000 to 16000.
VII) A perfluoropolyether containing repeating units:
-($CF_2CF_2CF_2O$)- having a molecular weight ranging from 4000 to 16000, the end groups being a perfluoroalkyl group or a perfluoroaryl group.
Such products can be prepared, for example, according to the method of EP-A-148 482. The repeating units of class VII may also contain, instead of F, perfluoroalkyl or perfluoroalkoxy groups, as indicated above for class IV.
The weight ratio between the compounds with functional end groups of type I, II, III or IV and the compounds with neutral end groups of type V, VI, VII expressed as I + II + III + IV/V + VI + VII is equal to or higher than 0.01.

It is also possible to use as inert perfluoropolyethers, the corresponding copolymers of class III.

The application of products I, II, III and IV, optionally in the presence of products V, VI and VII, is preferably accomplished in a solution of 1,1,2-trifluorotrichloroethane containing 50 to 80 % by weight of the perfluoropolyether products. It can be carried out by spraying an atomised liquid jet with or without compressed air, or by other appropriate means.

By the process of the present invention it is possible to obtain a better protection of works and articles made of stones, marble, cement, gypsum and wood as compared to the use of perfluoropolyethers as described in IT-A-19933 A/81. Such better protection is achieved by the use of products having a telomer structure containing a perfluoropolyether chain similar to the one described in the above-cited patent application and having functional end groups capable of exerting an anchoring action on the surface of the manufactured article, thus rendering the surface protection more stable in time.

The amount of perfluoropolyether protective agent to be used is very different depending on the nature of the material to be treated, in particular on its porosity. The amounts may be even lower than 10 g/m$^2$ for very compact materials (carrara marble) and may increase up to 300 g/m$^2$ and above for very porous materials.

The following examples are given for merely illustrative purposes and are not to be considered as a limitation of the possible embodiments when mixtures with perfluoropolyethers having neutral (inert) end groups are utilized.

EXAMPLE 1

There were utilized two test pieces of Carrara marble having the same composition, a porosity lower than 1 % and a cubic shape with one side measuring 50 mm.

One of the testpieces was treated on its surface with a derivative of a perfluoropolyether of type II provided with piperonyl end groups linked to the perfluoropolyether chain through radical -$CH_2O$- and X in the group -CFX- was equal to F, having a mean molecular weight of 2300, and prepared according to example 1 of IT-A-21481 A/84.

The piperonyl derivative of the perfluoropolyether was applied as a 5 % solution in 1,1,2-trichlorotrifluoroethane by means of a compressed-air sprayer so as to deposit an amount of protective fluid equal to 30 g/m$^2$ on the surface of the test piece. The amount of water absorbed on the two test pieces was measured after seven days. This measurement was effected by contacting a face of each test piece with an apparatus consisting of a glass cylinder filled with water and connected to a graduated microburette which permitted to measure the amount of water absorbed by the contact surface of the test piece. Said apparatus is described in more detail in the document published by the group Unesco-Rilem PEM, No. 78/182. The reading of the absorbed water was made at prefixed intervals of time and the read magnitude is expressed in microliters/cm$^2$ of surface.

In the treated test piece, the water absorbed per cm$^2$ was practically equal to zero up to 30 minutes; in the non-treated test piece, the absorbed amounts were 1.5 after 10 minutes, 4.6 after 20 minutes and 7.6 after 30 minutes, respectively (expressed in microliters for cm$^2$).

From a comparison of the two test pieces it is apparent that the surface treatment with the protective agent strongly reduced the rate of water penetration into the stone.

EXAMPLE 2

Two Carrara marble test pieces having a cubic shape with one side measuring 5 cm, were respectively treated, on one face only, with:

test piece 1 perfluoropolyether "Fomblin®Met", manufactured by Montefluos S.p.A., Milan, in amounts equal to 30 g/m². "Fomblin®Met" is a mixture of 30 parts by weight of 1,1,2-trichlorotrifluoroethane and of 70 parts by weight of Fomblin®YR, which is in turn a perfluoropolyether having a mean molecular weight of about 6000 and a kinematic viscosity of about 1000 cSt at 25° C and neutral end groups,

test piece 2 the piperonyl derivative of example 1 in an amount equal to 30 g/m².

Both test pieces were allowed to rest having care to maintain the treated surfaces in a vertical position. 15, 30 and 60 days after the treatment a slice of 3 mm thickness was cut from each test piece, the cut having been carried out perpendicular (and therefore in the direction of the protective agent penetration) to the face treated with the protective agent. Onto the slices so obtained there was deposited a very thin layer of metallic gold by using a conventional high-vacuum metalization device type "Galileo" V201r/00440. Since the metalization occurs only in those areas which are free of the protective agent, such method evidences the penetration front of the protective agent. The penetration depths (expressed in mm) of the two protective agents on the test piece were as follows:

| days | 15 | 30 | 60 |
|---|---|---|---|
| test piece 1 | 3.0 | 5.0 | 6.5 |
| test piece 2 | 1.2 | 1.4 | 1.4 |

The results of this example prove the higher residence (lower mobility) in the surface area of the stone material, of a protective agent functionalized according to the present invention as compared to a non-functionalized perfluoropolyether.

EXAMPLE 3

Example 1 was repeated using, as a protective agent, a compound of class II with benzyl end groups $C_6H_5$-$CH_2$-, prepared as described in example 1, where instead of chloromethyl-1,2-methylenedioxybenzene, benzyl chloride was utilized, the linking group being -$CH_2$O-.

The mean molecular weight was equal to 2200. The results obtained were analogous with those obtained in example 1 for the absorption of $H_2O$ after 30 minutes.

EXAMPLE 4

Example 2 was repeated using the same protective agent of example 3.

The penetration depth (expressed in mm) of the protective agent into the test pieces was as follows:

| days | depth (mm) |
|---|---|
| 15 | 2.1 |
| 30 | 2.8 |
| 60 | 3.0 |

## Claims

1. A process for protecting marble, stones, tiles, cement, gypsum or wood and other similar materials employed in particular as building materials against the degradation caused by atmospheric agents and pollutants, which comprises applying onto the surface of said materials a protective agent comprising

perfluoropolyethers which have functional end groups and are selected from one of the following groups:

I) $Rf-O-(C_3F_6O)_m(CFXO)_n-CFX-Y-Zp$

where Rf is a perfluoroalkyl group having 1 to 3 carbon atoms; $(C_3F_6O)$ and (CFXO) are oxyperfluoroalkylene units statistically distributed along the chain, and X = F or $CF_3$;

m and n are integers or n = 0 (m is always ≠ 0) and m/n varies from 5 to 40 when n ≠ 0;

p may be 1 or 2,

the mean molecular weight varies from 500 to 10000 (preferably from 900 to 6000);

Y is a divalent or trivalent organic linking radical;

Z is a functional group capable of forming a chemical and/or physical bond with the material to be protected and is selected from:

Z1) a non-aromatic, non-fluorinated organic radical, free of active hydrogen atoms, containing two or more electron pair-donor heteroatoms, or an aromatic radical, optionally containing heteroatoms, capable of forming coordinative bonds or charge-transfer bonds, thus causing adsorption phenomena of various kinds on the substrate;

Z2) $-CONR^2R^3$, -COOR

wherein R is H or an alkyl group with 1 to 8 carbon atoms, an aromatic or alkylaromatic group such as benzyl, where the aromatic groups may contain, as substituents, alkyl or polyethoxy groups, $R^2$ and $R^3$ are H or an alkyl group having 1 to 8 carbon atoms or a substituted phenyl group;

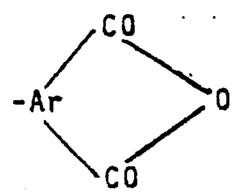 where Ar is an aromatic group;

-OH;

-NCO, 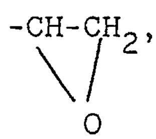, -NHR, -COR, $-SiR_t(OR)_{3-t}$

with t ranging from 0 to 2, and R being the same as defined hereinabove;

Z3) a group containing ethylenic unsaturations of the polymerizable type;

Z4) a radical of class Z1) containing one or more substituents indicated in class Z2);

II) $AO-(C_2F_4O)_p(CF_2O)_q-A'$

where units $(C_2F_4O)$ and $(CF_2O)$ are statistically distributed along the chain;

p and q are integers such that p/q may vary from 5 to 0.3, preferably from 2.5 to 0.7;

$A' = -CFX-Y-Z_p$;

A is A' or perfluoroalkyl having 1 to 3 carbon atoms;

p, X, Y and Z are the same as defined hereinabove;

the mean molecular weight varies from 1000 to 20000 (preferably from 1800 to 8000);

III) perfluoropolyether compounds containing units $(C_3F_6O)$, $(C_2F_4O)$ and (CFXO) statistically distributed along the chain with the indicated end groups A and A' as specified hereinbefore, and having a molecular weight ranging from 500 to 20000;

IV) difunctional or monofunctional perfluoropolyether compounds having functional end groups of the type $Y-Z_p$ as defined above and comprising the units:

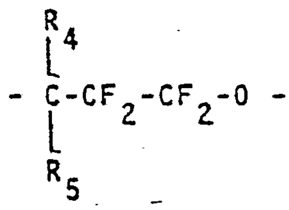

where $R_4$ and $R_5$ may be the same or different from each other and are selected from H, Cl, F, and where said units may be statistically distributed along the polymer chain; having a mean molecular weight ranging from 1500 to 8000; and where a fluorine-atom of the perfluoromethylene units can be substituted by H, Cl or by perfluoroalkoxy or perfluoroalkyl.

**2.** The process according to claim 1, characterized in that the perfluoropolyether of general formulae I, II, III or IV is used in admixture with a perfluoropolyether having neutral end groups and belonging to one of the following classes:

V) - $Rf\text{-}O\text{-}(C_3F_6O)_m(CFXO)_n\text{-}Rf'$

where $(C_3F_6O)$ and $(CFXO)$ are units statistically distributed along the chain;

Rf' may be like or unlike Rf and both consist of groups $CF_3$, $C_2F_5$, $C_3F_7$;

$X = F$ or $CF_3$;

m and n are integers;

when n = 0, Rf and Rf' are $C_2F_5$ or $C_3F_7$;

when n ≠ 0, the m/n ratio varies from 5 to 40;

the mean molecular weight varies from 4000 to 10000;

VI) - $CF_3\text{-}(C_2F_4O)_p(CF_2O)_qCF_3$

where units $(C_2F_4O)$ and $(CF_2O)$ are statistically distributed along the chain and p and q are the same as defined hereinabove; the mean molecular weight ranges from 4000 to 16000;

VII) a perfluoropolyether containing repeating units $-(CF_2CF_2O)-$ having a molecular weight ranging from 4000 to 16000, the end groups being a perfluoroalkyl or perfluoroaryl group; thé repeating units of class VII may also contain, instead of F, perfluoroalkyl or perfluoroalkoxy.

**3.** The process according to claim 1, in which Y is selected from $-CH_2O-$, $-CH_2\text{-}O\text{-}CH_2-$, $-CH_2(OCH_2CH_2)_g-$ (with g being from $-CH_2O-$, $-CH_2\text{-}O\text{-}CH_2-$ $-CH_2(OCH_2CH_2)_g-$ (with g being an integer from 1 to 3), $-CF_2-$, $-CF_2O-$, $-CH_2-$, -CONR-, -COO-, -COS-,, -CO-, $-CH_2NR-$, $-CH_2S-$, where R is the same as defined hereinabove.

**4.** The process according to any one of claims 1-3, in which Z3) is selected from methacrylic, acrylic, cinnamic, vinyl, allyl, vinylether or allylether groups.

**5.** The process according to claims 2-4, in which the weight ratio between perfluoropolyethers with functional end groups and perfluoropolyethers with neutral end groups is equal to or higher than 0.01.

## Revendications

**1.** Un procédé pour protéger le marbre, les pierres, les tuiles, le ciment, le gypse ou le bois et d'autres matériaux. similaires employés en particulier en tant que matériaux de construction contre la dégradation provoquée par des agents atmosphériques et des polluants, qui comprend l'application sur la surface de ces matériaux d'un agent protecteur comprenant des perfluoropolyéthers qui ont des groupes terminaux fonctionnels et sont choisis parmi l'un des groupes suivants:

I) $Rf\text{-}O(C_3F_6O)_m(CFXO)_n\text{-}CFX\text{-}Y\text{-}Z_p$

où Rf est un groupe perfluoroalkyle ayant 1 à 3 atomes de carbone; $(C_3F_6O)$ et $(CFXO)$ sont des unités oxyperfluoroalkylène distribuées statistiquement le long de la chaîne, et $X = F$ ou $CF_3$; m et n sont des entiers ou n = 0 (m est toujours ≠ 0) et m/n varie de 5 à 40 lorsque n ≠ 0; p peut être égal à 1 ou 2;

le poids moléculaire moyen varie de 500 à 10.000 (de préférence de 900 à 6.000);

Y est un radical de liaison organique divalent ou trivalent;

Z est un groupe fonctionnel capable de former une liaison chimique et/ou physique avec le matériau

à protéger et est choisi parmi:

Z 1) un radical organique non fluoré non aromatique, dépourvu d'atomes d'hydrogène actifs, contenant deux hétéroatomes donneurs de paires d'électrons ou davantage, ou un radical aromatique contenant éventuellement des hétéroatomes, capable de former des liaisons de coordination ou des liaisons de transfert de charge, de façon à provoquer des phénomènes d'adsorption de diverses sortes sur le substrat;

Z 2) $-CONR^2R^3$, -COOR

où R est H ou un groupe alkyle ayant 1 à 8 atomes de carbone, un groupe aromatique ou alkylaromatique comme benzyle, les groupes aromatiques contenant éventuellement des groupes alkyles ou polyéthoxy en tant que substituants,

$R^2$ et $R^3$ sont H ou un groupe alkyle contenant 1 à 8 atomes de carbone ou un groupe phényle substitué;

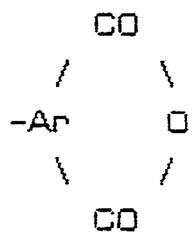 où Ar est un groupe aromatique;

-OH;

-NCO, 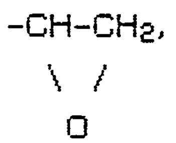, -NHR, -COR, $-SiR_t(OR)_{3-t}$ où t est

dans la gamme de 0 à 2 et R étant tel que défini plus haut;

Z 3) un groupe contenant des insaturations éthyléniques du type polymérisable;

Z 4) un radical de la classe Z 1) contenant un ou plusieurs des substituants indiqués dans la classe Z 2).

II) $AO-(C_2F_4O)_p(CF_2O)_q-A'$

où l'unité $(C_2F_4O)$ et l'unité $(CF_2O)$ sont distribuées de façon statistique le long de la chaîne;

p et q sont des entiers tels que p/q peut varier de 5 à 0,3, de préférence de 2,5 à 0,7;

A' est $-CFX-Y-Z_p$;

A est A' ou un groupe perfluoroalkyle ayant 1 à 3 atomes de carbone;

p, X, Y et Z sont tels que définis plus haut;

le poids moléculaire moyen varie de 1000 à 20.000 (de préférence de 1.800 à 8.000)

III) Des composés de type perfluoropolyéther contenant les unités $(C_3F_6O)$, $(C_2F_4O)$ et (CFXO) distribuées de façon statistique le long de la chaîne avec les groupes terminaux A et A' indiqués tels que définis plus haut, et ayant un poids moléculaire compris entre 500 et 20.000.

IV) Des composés de type perfluoropolyéther difonctionnels ou monofonctionnels ayant des groupes terminaux fonctionnels du type $Y - Z_p$ tel que défini plus haut et comprenant les unités:

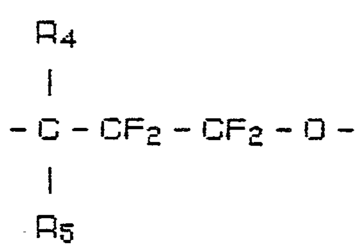

où $R_4$ et $R_5$ peuvent être identiques ou différents l'un de l'autre et sont choisis parmi H, Cl, F, ces unités étant distribuées de façon statistique le long de la chaîne polymère; ayant un poids moléculaire moyen compris entre 1500 et 8.000; et où l'atome de fluor des unités perfluorométhylène peut être substitué par H, Cl ou par un groupe perfluoroalcoxy ou perfluoroalkyle.

2. Le procédé suivant la revendication 1, caractérisé en ce que le perfluoropolyéther de formules générales I, II, III ou IV. est utilisé en mélange avec un perfluoropolyéther ayant des groupes terminaux neutres et appartenant à l'une des classes suivantes:
   V) $-Rf-O-(C_3F_6O)_m(CFXO)_n-Rf'$
   où $(C_3F_6O)$ et $(CFXO)$ sont des unités distribuées de façon statistique le long de la chaîne;
   Rf' peut être identique ou différent de Rf et tous les deux sont choisis parmi $CF_3$, $C_2F_5$ et $C_3F_7$;
   X = F = ou $CF_3$;
   m et n sont des entiers;
   lorsque n = 0, Rf et Rf' sont $C_2F_5$ ou $C_3F_7$;
   lorsque $n \neq 0$, le rapport m/n varie de 5 à 40;
   le poids moléculaire moyen varie de 4.000 à 10.000.
   VI) $-CF_3-(C_2F_4O)_p(CF_2O)_q-CF_3$
   où $(C_2F_4O)$ et $(CF_2O)$ sont des unités distribuées de façon statistique le long de la chaîne;
   p et q sont tels que définis plus haut;
   le poids moléculaire moyen varie de 4.000 à 16.000.
   VII) un perfluoropolyéther contenant des unités répétées:
   $-(CF_2CF_2CF_2O)-$, ayant un poids moléculaire de l'ordre de 4.000 à 16.000 les groupes terminaux étant un groupe perfluoroalkyle ou un groupe perfluoroaryle; les unités répétées de classe VII peuvent aussi contenir à la place de F, des groupes perfluoroalkyles ou perfluoroalcoxy.

3. Le procédé suivant la revendication 1, dans lequel Y est choisi parmi $-CH_2O-$, $-CH_2-O-CH_2-$, $-CH_2-(OCH_2CH_2)_g-$ (g étant un entier de 1 à 3), $-CF_2-$, $-CF_2O-$, $-CH_2-$, -CONR-, -COO-, -COS-, -CO-, $-CH_2NR-$, $-CH_2S-$, où R est tel que défini plus haut.

4. Le procédé suivant l'une quelconque des revendications 1 à 3, dans lequel Z 3) est choisi parmi des groupes méthacrylique, acrylique, cinnamique, vinylique, allylique, éther vinylique ou éther allylique.

5. Le procédé suivant les revendications 2-4, dans lequel le rapport pondéral entre les perfluoropolyéthers ayant des groupes terminaux fonctionnels et des perfluoropolyéthers ayant des groupes terminaux neutres est égal ou supérieure à 0,01.

## Ansprüche

1. Verfahren zum Schutz von Marmor, Gestein, Ziegeln, Zement, Gips oder Holz und ähnlichen Materialien, welche insbesondere als Baumaterial verwendet werden, gegen die Zersetzung durch Bestandteile der Atmosphäre und Schadstoffe, umfassend das Versehen der Oberfläche der genannten Materialien mit einem Schutzmittel, welches Perfluorpolyether mit funktionellen Endgruppen umfaßt, die aus den folgenden ausgewählt sind:
   I) $Rf-O-(C_3F_6O)_m(CFXO)_n-CFX-Y-Zp$
   worin Rf eine Perfluoralkylgruppe mit 1 bis 3 Kohlenstoffatomen ist;
   $(C_3F_6O)$ und $(CFXO)$ statistisch entlang der Kette verteilte Oxyperfluoralkylen-Einheiten darstellen, und X = F oder $CF_3$;
   m und n ganze Zahlen sind oder n = 0 (m immer ungleich 0) und m/n von 5 bis 40 variiert, wenn n ungleich 0; p 1 oder 2 bedeuten kann;
   das mittlere Molekulargewicht von 500 bis 10 000 (vorzugsweise von 9000 bis 6000) variiert;
   Y ein zweiwertiger oder dreiwertiger verbrückender organischer Rest ist;
   Z eine funktionelle Gruppe, die imstande ist, mit dem zu schützenden Material eine chemische und/oder physikalische Bindung einzugehen, und aus den folgenden ausgewählt ist:
      Z1) ein nicht-aromatischer, nicht-fluorierter organischer Rest, frei von aktiven Wasserstoffatomen, der 2 oder mehr Heteroatome als Elektronenpaar-Donoren enthält, oder ein aromatischer Rest, gegebenenfalls Heteroatome enthaltend, der imstande ist, koordinative oder charge-transfer-Bindungen auszubilden und auf diese Weise verschiedene Adsorptionsphänomene auf dem Substrat verursacht;
      Z2) $-CONR^2R^3$, -COOR
      worin R H oder eine Alkylgruppe mit 1 bis 8 Kohlenstoffatomen, eine aromatische oder alkylaromatische Gruppe wie z.B. Benzyl darstellt, worin die aromatischen Gruppen als Substituenten Alkyl- oder Polyethoxy-Gruppen enthalten können,

$R^2$ und $R^3$ H oder eine Alkylgruppe mit 1 bis 8 Kohlenstoffatomen oder eine substituierte Phenylgruppe bedeuten;

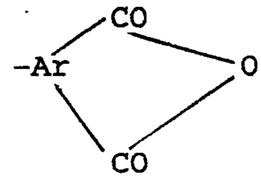 worin Ar eine aromatische Gruppe ist;

-OH;

-NCO, 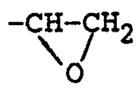, -NHR, -COR, $-SiR_t(OR)_{3-t}$,

worin t von 0 bis 2 reicht und R wie oben definiert ist;

Z3) eine Gruppe mit ethylenisch ungesättigten Bindungen polymerisierbarer Art;

Z4) ein Rest der Klasse Z1) mit einem oder mehreren der in Klasse Z2) angegebenen Substituenten ;

II) $AO-(C_2F_4O)_p(CF_2O)_q-A'$

worin die Einheiten ($C_2F_4O$ und ($CF_2O$) statistisch entlang der Kette verteilt sind;

p und q ganze Zahlen sind, solcherart daß p/q von 5 bis 0,3, vorzugsweise von 2,5 bis 0,7, variieren kann;

$A' = -CFX-Y-Z_p$;

A A' oder Perfluoralkyl mit 1 bis 3 Kohlenstoffatomen darstellt;

p, X, Y und Z wie oben definiert sind;

das mittlere Molekulargewicht von 1000 bis 20 000 (vorzugsweise von 1800 bis 8000) variiert;

III) Perfluorpolyether-Verbindungen, welche die Einheiten ($C_3F_6O$), ($C_2F_4O$) und (CFXO) mit den wie oben definierten Endgruppen A und A' in statistischer Verteilung entlang der Kette enthalten, mit einem Molekulargewicht von 500 bis 20 000;

IV) bifunktionelle oder monofunktionelle Perfluorpolyether-Verbindungen mit funktionellen Endgruppen des oben definierten Typs $Y-Z_p$, und die die Einheiten

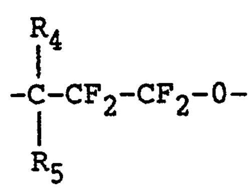

umfassen, worin $R_4$ und $R_5$ gleich oder verschieden sein können und aus H, Cl und F ausgewählt sind, und worin die Einheiten statistisch entlang der Polymer-Kette verteilt sein können;

ein mittleres Molekulargewicht von 1500 bis 8000 aufweisen;

und worin ein Fluoratom der Perfluormethylen-Einheiten durch H, Cl oder Perfluoralkoxy oder Perfluoralkyl ersetzt werden kann.

**2.** Verfahren nach Anspruch 1, dadurch gekennzeichnet, daß der Perfluorpolyether der allgemeinen Formeln I, II, III und IV in Mischung mit einem Perfluorpolyether mit neutralen Endgruppen, der zu einer der folgenden Klassen gehört, verwendet wird:

V) $-Rf-O-(C_3F_6O)_m(CFXO)_n-Rf'$

worin ($C_3F_6O$) und (CFXO) statistisch entlang der Kette verteilte Einheiten sind;

Rf' gleich oder ungleich Rf sein kann und beide aus den Gruppen $CF_3$, $C_2F_5$, $C_3F_7$ bestehen;

$X = F$ oder $CF_3$;

m und n ganze Zahlen sind;

für $n = 0$, Rf und Rf' $C_2F_5$ oder $C_3F_7$ sind;

das Verhältnis m/n von 5 bis 40 variiert, wenn n ungleich 0;

das mittlere Molekulargewicht von 4000 bis 10 000 variiert;
VI) $-CF_3-(C_2F_4O)_p(CF_2O)_qCF_3$
worin die Einheiten $(C_2F_4O)$ und $(CF_2O)$ statistisch entlang der Kette verteilt sind und p und q wie oben definiert sind;
das mittlere Molekulargewicht von 4000 bis 16 000 reicht;
VII) ein Perfluorpolyether, der Struktureinheiten $-(CF_2CF_2O)-$ enthält, mit einem Molekulargewicht von 4000 bis 16 000, worin die Endgruppen eine Perfluoralkyl- oder Perfluorarylgruppe darstellen;
die Struktureinheiten der Klasse VII statt F auch Perfluoralkyl oder Perfluoralkoxy enthalten können;

**3.** Verfahren nach Anspruch 1, worin Y aus $-CH_2O-$, $-CH_2-O-CH_2-$, $CH_2(OCH_2CH_2)_g-$ (wobei g eine ganze Zahl von 1 bis 3 ist), $-CF_2-$, $-CF_2O-$, $-CH_2-$, -CONR-, -COO-, -COS-, -CO-, $-CH_2NR-$, $-CH_2S-$, worin R wie oben definiert ist, ausgewählt ist.

**4.** Verfahren nach irgendeinem der Ansprüche 1 bis 3, worin Z3) aus Methacryl-, Acryl-, Cinnamyl-, Vinyl-, Allyl-, Vinylether- oder Allylether-Gruppen ausgewählt ist.

**5.** Verfahren nach den Ansprüchen 2 bis 4, worin das Gewichtsverhältnis zwischen den Perfluorpolyethern mit funktionellen Endgruppen und den Perfluorpolyethern mit neutralen Endgruppen größer oder gleich 0,01 ist.